Europäisches Patentamt

European Patent Office

Office européen des brevets

(11) Numéro de publication: **0 274 332 B1**

# FASCICULE DE BREVET EUROPEEN

(45) Date de publication de fascicule du brevet:
06.03.91

(51) Int. Cl.⁵: **B25J 15/04**

(21) Numéro de dépôt: 87420339.1

(22) Date de dépôt: 14.12.87

(54) **Dispositif préhenseur d'outil pour télémanipulateurs, robots industriels ou ensembles analogues.**

(30) Priorité: 16.12.86 FR 8617776

(43) Date de publication de la demande:
13.07.88 Bulletin 88/28

(45) Mention de la délivrance du brevet:
06.03.91 Bulletin 91/10

(84) Etats contractants désignés:
CH DE ES GB IT LI SE

(56) Documents cités:
EP-A- 0 017 508       DE-A- 3 443 444
FR-A- 2 581 338       FR-A- 2 581 338
GB-A- 1 122 981       GB-A- 2 118 522

(73) Titulaire: **S.A. DES ETABLISSEMENTS STAU-
BLI (France)**
**B.P. 20 183 Rue des Usines**
**F-74210 Faverges(FR)**

(72) Inventeur: **Truchet, Gaston**
**Route d'Annecy**
**F-74210 Faverges(FR)**

(74) Mandataire: **Monnier, Guy et al**
**Cabinet Monnier 150 Cours Lafayette B.P.
3058**
**F-69393 Lyon Cédex 03(FR)**

## Description

La présente invention a trait aux dispositifs préhenseurs montés en bout de l'organe mobile des télé-manipulateurs, robots industriels ou autres centres d'usinage en vue de saisir un outil de travail préalablement à la mise en oeuvre de celui-ci ou de libérer cet outil en fin de travail, ces opérations étant effectuées de manière entièrement automatique, sans intervention manuelle.

Par le document DE-A-3 443 444 ASEA AS, on connaît déjà des dispositifs préhenseurs du type concerné qui comprennent, à l'intérieur d'un manchon porté par l'extrémité libre du bras mobile d'un robot industriel, un verrou qui est soumis à des moyens de commande hydrauliques afin de se déplacer axialement dans le manchon précité et qui est destiné à être traversé par un bouton solidaire de chaque outil, les faces en contact du verrou et du bouton précités étant profilées de façon à ce que le déplacement du verrou assure l'immobilisation axiale, respectivement la libération, du bouton.

Pour éclairer l'état de la technique, on citera encore le document FR-A-2 581 338 MANITOU BF qui vise un agencement assez voisin, étant toutefois observé que dans ce cas c'est chaque outil qui est équipé du manchon avec son systéme hydraulique de commande. Le verrou monté dans ce manchon est formé par une tige pourvue d'un cône apte à venir élastiquement s'engager dans une partie conique d'une fente pratiquée dans un ergot solidaire de l'extrémité du bras mobile du robot.

L'invention a plus spécialement pour but de réaliser un dispositif préhenseur du genre susvisé qui soit de construction simple et fiable, tout en étant susceptible d'éviter radicalement toute apparition de jeu entre ledit dispositif et chacun des outils envisagés une fois cet outil fixé en place.

Le dispositif suivant l'invention est défini à la revendication 1.

Le dessin annexé, donné à titre d'exemple, permettra de mieux comprendre l'invention, les caractéristiques qu'elle présente et les avantages qu'elle est susceptible de procurer :

Fig. 1 est une vue de côté schématique illustrant le montage d'un dispositif préhenseur à l'extrémité du bras mobile d'un télé-manipulateur.

Fig. 2 est une coupe axiale à plus grande échelle, représentant le dispositif préhenseur suivant l'invention et l'un des outils correspondants, préalablement à l'emmanchement.

Fig. 3 est une vue en perspective du verrou à l'état démonté.

Fig. 4 est une coupe longitudinale de détail, suivant le plan indiqué en IV-IV en fig. 2.

Fig. 5 reproduit fig. 2 après que le bouton de l'outil ait été engagé à l'intérieur du dispositif.

Fig. 6 est une coupe analogue, les pièces étant toutefois représentées après rapprochement à force de l'outil.

Fig. 7 est une coupe suivant le plan VII-VII de fig. 6.

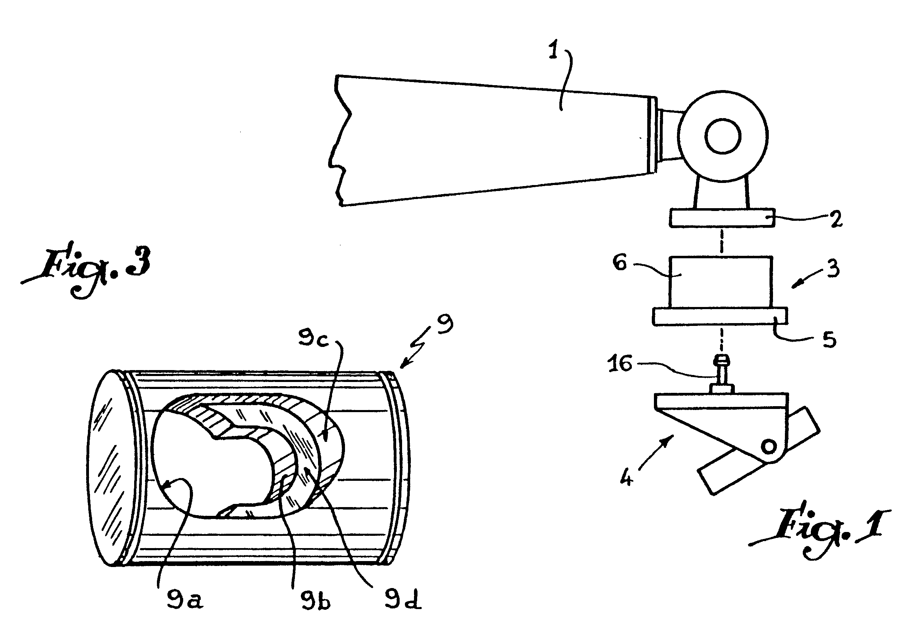

En fig. 1, on a représenté en 1 l'extrémité libre du bras mobile d'un télé-manipulateur, qui porte à pivotement un plateau 2 contre lequel vient se fixer le dispositif préhenseur 3, ce dernier étant destiné à assurer la fixation automatique de l'un quelconque 4 d'une série d'outils de travail.

Comme montré en fig. 2, le corps du dispositif 3 est formé par l'assemblage d'une plaquette 5 et d'un manchon 6 dans l'alésage axial 6 a duquel est engagé un poussoir cylindrique 7 associé à un ressort de rappel 8 qui tend à le repousser vers le bas. Dans l'épaisseur du manchon 6 est pratiqué un alésage 6 b qui intersecte l'alésage 6 a , en étant orienté de manière légèrement oblique par rapport à la normale à l'axe du manchon. Cet alésage oblique 6 b forme logement pour le coulissement étanche d'un verrou cylindrique 9 qui est percé d'une ouverture dont le profil complexe apparaît en fig. 3.

Comme montré, cette ouverture présente une partie principale 9 a à grand rayon qui s'étend sur toute l'épaisseur de la pièce et qui se raccorde latéralement, d'une part vers le bas à une partie 9 b à petit rayon, d'autre part vers le haut à une partie 9 c dont le rayon est égal à celui de la partie principale 9 a . On conçoit que la jonction des deux parties latérales superposées 9 b et 9 c détermine un épaulement 9 d en forme de dent, orienté perpendiculairement à l'axe de l'alésage 6 a du manchon 6.

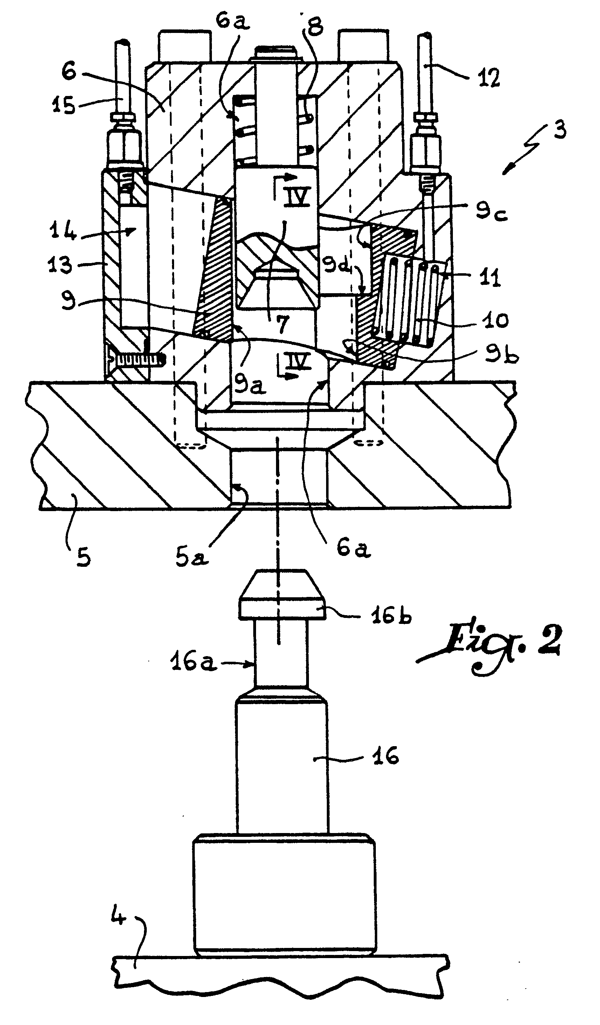

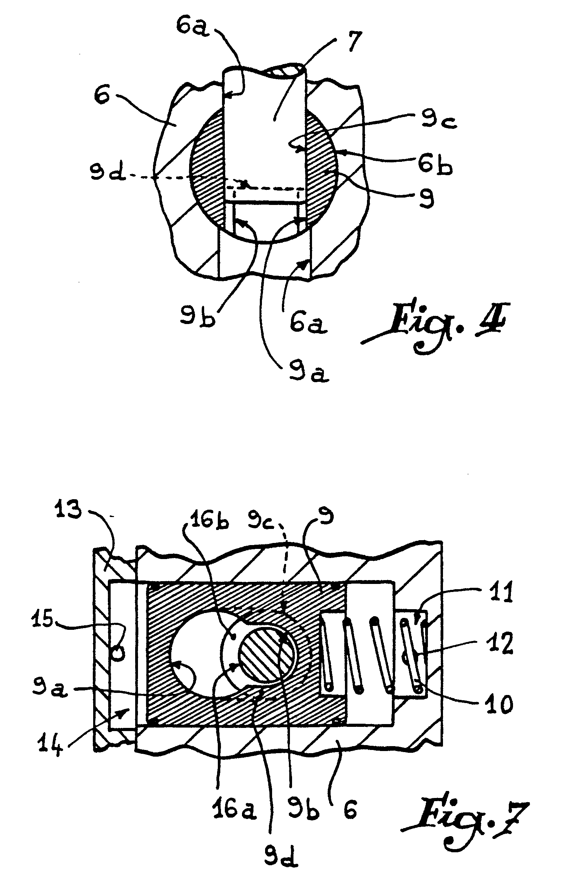

On observera en fig. 4 que l'engagement partiel du poussoir 7 à l'intérieur de l'ouverture 9 a s'oppose à tout déplacement angulaire intempestif dudit verrou une fois celui-ci mis en place dans l'alésage 6 b à travers l'extrémité prévue ouverte de celui-ci. On notera également (fig. 2) que ce poussoir 7 est engagé à jeu réduit dans la partie principale 9 a sur une hauteur telle qu'il forme butée pour la partie latérale 9 b à petit rayon.

Au verrou 9 est associé un ressort de rappel 10 (fig. 2) qui prenant appui contre l'extrémité fermée de l'alésage oblique 6 b , tend à repousser ledit verrou vers l'extrémité ouverte opposée. Ce ressort 10 est logé à l'intérieur d'une chambre 11 reliée par une canalisation 12 au distributeur d'une installation pneumatique ou hydraulique. A l'opposé, un capot latéral 13 rapporté contre le manchon 6 définit avec le débouché de l'alésage oblique 6 b une chambre 14 associée à une canalisation 15 liée au distributeur susmentionné.

Il convient encore d'observer que chacun des outils 4 comporte un bouton 16 en saillie, creusé d'une dépression annulaire 16 a dont le diamètre est très légèrement inférieur à celui de la partie 9 b de l'ouverture du verrou 9.

Le fonctionnement et l'utilisation du dispositif préhenseur ci-dessus décrit apparaissent de l'examen comparatif des fig. 2, 5 et 6.

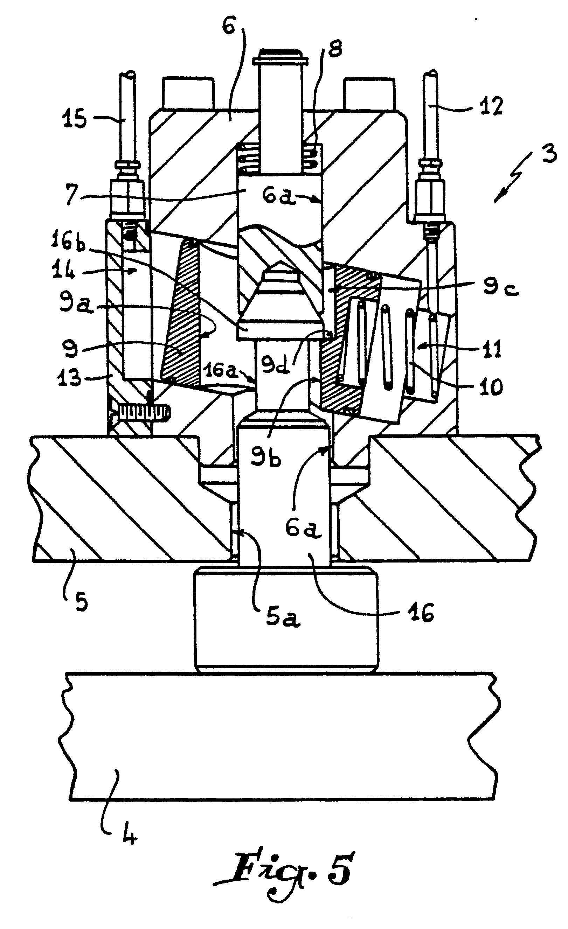

Si l'on suppose qu'à partir de la position dissociée représentée en fig. 2, le corps 5-6 du dispositif s'abaisse en direction de l'outil 4 considéré, on comprend que l'embout profilé 16 b du bouton 16 traverse en premier lieu l'ouverture 5 a pratiquée dans la plaquette 5 en coïncidence avec l'alésage 6 a du manchon, et s'engage dès lors, tout d'abord dans le débouché inférieur dudit alésage, puis dans la partie principale 9 a de l'ouverture du verrou 9. Cette pénétration provoque évidemment le recul élastique du poussoir 7 dont l'extrémité libre va à un moment donné se trouver au niveau de la partie latérale 9 c à grand rayon. A cet instant et comme illustré en fig. 5, le ressort 10 repousse le verrou 9 dont la partie latérale 9 c vient embrasser le poussoir 7 tandis que la dent transversale 9 b vient s'enclencher dans la dépression 16 a du bouton 16.

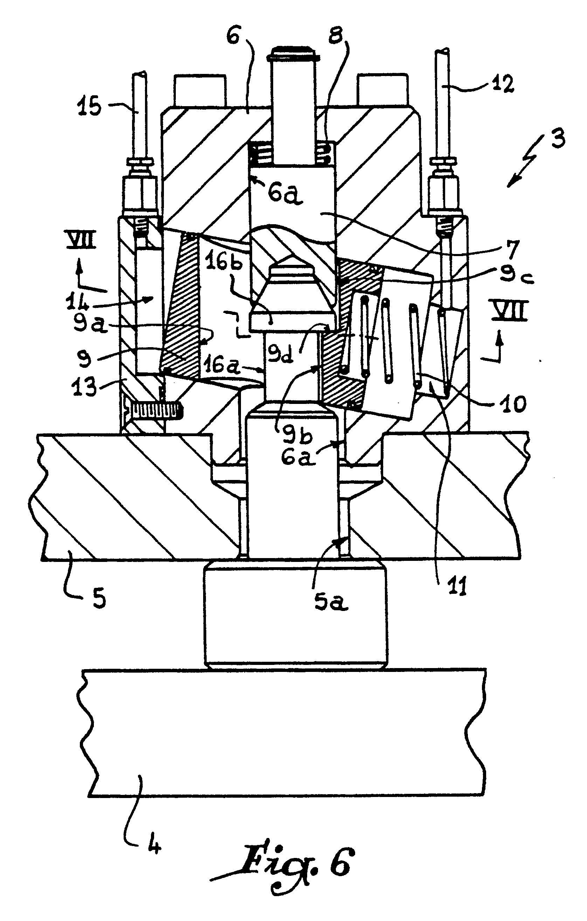

Si l'on suppose qu'à ce moment la canalisation 12 est alimentée à travers le distributeur de l'installation, le fluide sous pression qui emplit la chambre 11 repousse axialement le verrou 9 jusqu'à amener celui-ci à la position illustrée en fig. 6. On conçoit que par suite de l'obliquité du déplacement du verrou 9 par rapport à l'axe des pièces 6 et 16, la dent 9 b exerce sur le bouton 16 un effort dont la résultante provoque le déplacement axial dudit bouton et, de ce fait, le rapprochement à force des deux pièces 4 et 3.

Cet effort de rapprochement est maintenu aussi longtemps que la chambre 11 est alimentée, en s'opposant ainsi à toute apparition de jeu entre l'outil et le dispositif préhenseur. Il ne cesse que lorsqu'en vue de la dissociation de cet outil 4 la canalisation 15 est alimentée en fluide sous pression pour ramener le verrou 9 à la position initiale suivant fig. 2. On observera qu'à ce moment le bouton 16 est expulsé du corps 5-6 par le ressort 8 associé au poussoir 7, de telle sorte que l'outil 4 est automatiquement libéré.

On obtient donc les buts principalement recherchés, à savoir un fonctionnement entièrement automatique en dépit d'une construction simple et robuste, et un rattrapage automatique du jeu susceptible d'apparaître entre l'outil et le dispositif préhenseur.

On remarquera que le ressort 10 peut avantageusement être prévu de force telle qu'il assure à lui seul le maintien des pièces 3 et 4 à la position rapprochée dans le cas où l'installation de fluide sous pression viendrait à subir une défaillance.

## Revendications

1. Dispositif préhenseur d'outil pour télé-manipulateurs, robots industriels et ensembles analogues, du genre comprenant un manchon (6) pourvu d'un verrou mobile (9) qui est destiné à être traversé par un bouton profilé solidaire de chaque outil (4) et qui est propre à venir élastiquement s'enclencher à l'intérieur d'une dépression annulaire (16a) pratiquée dans ledit bouton, le verrou (9) étant monté à l'intérieur d'un alésage (6 b) convenablement relié à une source de fluide sous pression destinée à assurer son déplacement axial, caractérisé en ce que le verrou (9) est orienté obliquement par rapport à l'axe commun au manchon (6) et au bouton (16), de façon à ce que son déplacement assure, par portée d'une dent interne (9 b) contre l'un des bords de la dépression annulaire (16 a) du bouton, le rapprochement à force de l'outil et du manchon une fois ce bouton engagé dans le verrou, tandis qu'il est prévu des moyens pour maintenir ce dernier à une position axiale telle que son ouverture coïncide avec l'alésage (6 a) ménagé dans le manchon (6) pour l'emmanchement du bouton (16).

2. Dispositif suivant la revendication 1, caractérisé en ce que les moyens pour le maintien du verrou (9) en position d'emmanchement sont constitués par un poussoir axial (7) associé à des moyens élastiques (8) qui tendent à l'engager à l'intérieur de l'ouverture (9 a -9 b -9 c) dudit verrou (9).

3. Dispositif suivant la revendication 2, caractérisé en ce que l'ouverture du verrou (9) comprend une partie principale à grand rayon (9 a) apte à recevoir le poussoir (7) et le bouton (16), une première partie latérale (9 b) à plus petit rayon propre à coopérer avec la dépression annulaire (16 a) dudit bouton, et une seconde partie latérale (9 c) établie au même rayon que la partie principale (9 a) et superposée à la première partie latérale (9 h) afin de loger le poussoir précité une fois que celui-ci a été repoussé par l'embout profilé (16 b) du bouton.

## Claims

1. A tool gripper for manipulators, industrial robots and similar units, of the type comprising a sleeve (6) provided with a mobile bolt (9) through which a profiled button (16) integral with each tool (4) is to pass, which bolt is suitable for interlocking elastically in an annular depression (16a) made in said button, the bolt (9) being mounted inside a bore (6 b ) suitably connected to a source of pressurised liquid intended to ensure the axial displacement thereof, characterised in that the bolt (9) is orientated obliquely relative to the axis common to the sleeve (6) and to the button (16) in such a manner that by an internal tooth (9 b ) bearing on one of the edges of the annular depression (16 a ) of the button the displacement of said bolt ensures the forced bringing together of the tool and the sleeve once the button has engaged in the bolt, while means are provided for holding said bolt in an axial position such that the opening thereof coincides with the bore (6 a ) made in the sleeve (6) for fixing the button (16).

2. A gripper according to Claim 1, characterized in that the means for holding the bolt (9) in the fixed position are formed by an axial tappet (7) linked to elastic means (8) which tend to engage it inside the opening (9 a -9 b -9 c ) of said bolt (9).

3. A gripper according to Claim 2, characterized in that the opening of the bolt (9) comprises a main part having a large radius (9 a ) capable of receiving the tappet (7) and the button (16), a first lateral part (9 b ) having a smaller radius which is suitable for cooperating with the annular depression (16 a ) of said button, and a second lateral part (9 c ) made with the same radius as the main part (9 a ) and superposed on the first lateral part (9 b ) so as to house the aforementioned tappet once it has been pushed back by the profiled joining piece (16 b ) of the button.

### Ansprüche

1. Werkzeuggreifervorrichtung für ferngesteuerte Manipulationen, industrielle Roboter und ähnliche Anordnungen, von der Art mit einer Muffe (6), die mit einem beweglichen Riegel (9) versehen ist, der dazu bestimmt ist, von einem profilierten Knopf (16) durchquert zu werden, der mit jedem Werkzeug (4) verbunden ist und der geeignet ist, sich elastisch im Inneren einer ringförmigen Vertiefung (16a), die in dem Knopf ausgebildet ist, einzuklinken, wobei der Riegel (9), der im Inneren einer Ausnehmung (6b) angeordnet ist, in geeigneter Weise mit einer Druckfluidquelle verbunden ist, die dazu bestimmt ist, seine Axialbewegung sicherzustellen, **dadurch gekennzeichnet, daß** der Riegel (9) bezüglich der gemeinsamen Achse von Muffe (6) und Knopf (16) geneigt angeordnet ist, derart, daß seine Bewegung durch die Unterstützung eines inneren Zahnes (9b) gegen einen der Ränder der ringförmigen Vertiefung (16a) des Knopfes, die Annäherung unter Kraft des Werkzeugs und der Muffe sicherstellt, wenn dieser Knopf in die Muffe eingreift, während Einrichtungen zum Halten des letzteren in einer axialen Stellung vorgesehen sind, derart, daß seine Öffnung mit der Ausnehmung (6a) übereinstimmt, die in der Muffe (6) für die Aufnahme des Knopfes (16) ausgebildet ist.

2. Vorrichtung nach Anspruch 1, **dadurch gekennzeichnet,** daß die Einrichtungen zum Halten des Riegels (9) in Aufnahmestellung gebildet sind aus einem axialen Drücker (7), der elastischen Einrichtungen (8) zugeordnet ist, die ihn dazu bringen, in das Innere der Öffnung (9a-9b-9c) des Riegels (9) einzugreifen.

3. Vorrichtung nach Anspruch 2, **dadurch gekennzeichnet,** daß die Öffnung des Riegels (9) einen Hauptbereich mit großem Radius (9a), der in der Lage ist, den Drucker (7) und den Knopf (16) aufzunehmen, einen ersten Seitenbereich (9b) mit geringerem Druchmesser, der geeignet ist, mit der ringförmigen Vertiefung (16a) des Knopfes zusammenzuwirken, und einen zweiten Seitenbereich (9c) aufweist, der auf demselben Radius wie der Hauptbereich (9a) gebildet ist und dem ersten Seitenbereich (9b) übergeordnet ist, um den vorgenannten Drücker aufzunehmen, wenn dieser durch das profilierte Endstück (16b) des Knopfes zurückgedrückt wurde.

Fig. 3

Fig. 1

9c

9

9a    9b    9d

1

2

6

3

5

16

4

EP 0 274 332 B1

*Fig. 2*

Fig. 4

Fig. 7

*Fig. 5*

*Fig. 6*